(19) Europäisches Patentamt
European Patent Office
Office européen des brevets

(11) Veröffentlichungsnummer: **0 154 816**
**B1**

(12) # EUROPÄISCHE PATENTSCHRIFT

(45) Veröffentlichungstag der Patentschrift: **14.12.88**

(51) Int. Cl.⁴: **C 09 B 29/36,** C 09 B 29/42, D 06 P 3/24, D 06 P 3/32

(21) Anmeldenummer: **85101428.2**

(22) Anmeldetag: **11.02.85**

(54) **Sulfonsäuregruppenhaltige Azoverbindungen.**

(30) Priorität: **18.02.84 DE 3405859**

(43) Veröffentlichungstag der Anmeldung: **18.09.85 Patentblatt 85/38**

(45) Bekanntmachung des Hinweises auf die Patenterteilung: **14.12.88 Patentblatt 88/50**

(84) Benannte Vertragsstaaten: **CH DE FR GB IT LI**

(56) Entgegenhaltungen:
**EP-A-0 035 172**
**FR-A-2 214 727**
**GB-A-2 067 585**
**US-A-4 359 418**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch- Strasse 38, D-6700 Ludwigshafen (DE)**

(72) Erfinder: **Lamm, Gunther, Dr., Heinrich- Heine-Strasse 7, D-6733 Hassloch (DE)**

**EP 0 154 816 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Aus der EP-A-35 172 ist ein Azofarbstoff bekannt, der als Diazokomponente 4,5-Dichlor-2-hydroxysulfonylanilin und als Kupplungskomponente 2,6-Bis(3-ethoxypropylaminol-3-cyano-4-methylpyridin aufweist. Es hat sich jedoch gezeigt, daß dieser Farbstoff anwendungstechnische Mängel aufweist.

Die Erfindung betrifft nun Verbindungen, die in Form der freien Säuren der Formel

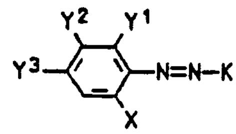

entsprechen, in der

X Chlor, Brom oder Trifluormethyl,

einer der beiden Reste $Y^1$ und $Y^2$ Wasserstoff und der andere Hydroxysulfonyl,

$Y^3$ Chlor oder Brom und
K einen Rest der Formel

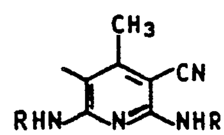

bedeuten, wobei
R für gegebenenfalls durch Sauerstoff unterbrochenes und gegebenenfalls durch Hydroxy, $C_1$-$C_4$-Alkoxy oder phenoxy substituiertes $C_1$-$C_8$-Alkyl oder Pyrrolidonyl-$C_2$-$C_6$-Alkyl steht.

Reste R sind z. B.:

$CH_3$, $C_2H_5$, n- oder i-$C_3H_7$, n- oder i-$C_4H_9$, $C_6H_{13}$,
$CH_2\text{-}CH\text{-}C_4H_9$ (mit $C_2H_5$ an CH), $CH_2CH_2OH$, $(CH_2)_3OH$, $CH_2CHOH$ (mit $CH_3$ an CH), $CH\text{-}CH_2OH$ (mit $CH_3$ an CH),

$(CH_2)_4OH$, $(CH_2)_6OH$, $(CH\text{-}(CH_2)_3C(CH_3)_2$ (mit $CH_3$ an CH und OH an C), $(CH_2)_2O(CH_2)_2OH$,

$(CH_2)_3O(CH_2)_4OH$, $(CH_2)_3OC_2H_4OH$, $(CH_2)_3OC_2H_4OCH_3$, $(CH_2)_3OC_2H_4OC_2H_5$, $(CH_2)_3OC_2H_4OCH(CH_3)_2$, $(CH_2)_3OC_2H_4OC_4H_9$, $(CH_2)_3OC_2H_4OC_6H_5$, $(CH_2)_3OCH\text{-}CH_2OCH_3$ (mit $CH_3$ an CH), $(CH_2)_3\text{-}OCHCH_2OC_4H_9$ (mit $CH_3$ an CH), $(CH_2)_3OCH_2CHOCH_3$ (mit $CH_3$ an CH),

$(CH_2)_3OCHCH_2OC_2H_5$ (mit $CH_3$ an CH),

die entsprechenden Reste, bei denen die Gruppierung $-OC_2H_4$-zweimal vorhanden ist,
$CH_2CH_2OCH_3$, $CH_2CH_2OC_2H_5$, $CH_2CH_2OC_3H_7$, $CH_2CH_2OC_4H_9$, $CH_2CH_2OC_6H_5$, $(CH_2)_3OCH_3$, $(CH_2)_3OC_2H_5$, $(CH_2)_3OC_3H_7$, $(CH_2)_3OC_4H_9$, $-CH\text{-}CH_2OCH_3$ (mit $CH_3$ an CH), $-CHCH_2OCH_3$ (mit $C_2H_5$ an CH), $(CH_2)_2OC_6H_5$,

$OC_2H_5$

$CHCH_2OC_4H_9$, $CHCH_2OC_6H_5$, $CH_2CHOCH_3$, $CH_2CH$

$CH_3$ $CH_3$ $CH_3$ $CH_3$

$CH_2CH$-$OC_4H_9$ oder $CH_2CH$-$OC_6H_5$.

$CH_3$ $CH_3$

Bevorzugte Substituenten R sind beispielsweise:

$C_2H_5$, n- oder i-$C_3H_7$, n- oder i-$C_4H_9$, $CH_2CH_2OH$, $(CH_2)_3OH$,
$CH_2CHOH$, $(CH_2)_4OH$, $(CH_2)_6OH$, $(CH_2)_2O(CH_2)_2OH$, $CHCH_2OCH_3$,

$CH_3$ $CH_3$

$(CH_2)_3O(CH_2)OH$, $(CH_2)_3O(CH_2)_4OH$, $CH_2CH_2OCH_3$, $CH_2CH_2OC_2H_5$, $CH_2CH_2OC_4H_9$, $(CH_2)_3OCH_3$, $(CH_2)_3OC_2H_5$, $(CH_2)_3OC_3H_7$, $(CH_2)_3OC_4H_9$, $(CH_2)_3OC_2H_4OCH_3$ oder $(CH_2)_3OC_2H_4OC_4H_9$.

Zur Herstellung der erfindungsgemäßen Farbstoffe kann man Diazokomponente von Aminen der Formel

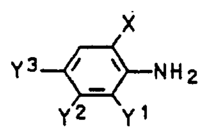

wie üblich diazotieren und die erhaltenen Diazoniumsalze mit den entsprechenden Kupplungskomponenten umsetzen.

Die neuen Farbstoffe eignen sich gut zum egalen Färben von Polyamid. Sie sind wegen ihres schnellen Aufziehvermögens für Trichromiefärbungen besonders geeignet.

Hervorzuheben sind außerdem die guten Lichtechtheiten auf Wolle und das günstige Phototropie-Verhalten sowie das sehr gute Egalisieren.

Einige erfindungsgemäße Verbindungen sind auch zum Färben von Leder brauchbar.

In den folgenden Beisipelen beziehen sich Angaben über Teile und Prozente, sofern nicht anders vermerkt, auf das Gewicht.

**Herstellung der Vorprodukte**

A) 2,4-Dichloracetanilid

270 Teile Acetanilid werden in 1000 Raumteilen Nitrobenzol innerhalb von 3 Std. bei 50 bis 70°C mit 396 Raumteilen Sulfurylchlorid versetzt (man beginnt die Chlorierung bei niederer Temperatur und steigert sie dann, um die Ausfällung von 2,4-Dichloracetanilid zu unterbinden). Nach beendeter Sulfurylchlorid-Zugabe rührt man 1 Std. bei 70 bis 75°C nach und bläst anschließend gelöste Salzsäure mit Stickstoff aus. Danach läßt man erkalten, wodurch 2,4-Dichloracetanilid ausfällt, das durch Abfiltrieren isoliert wird.

Man kann das Produkt mit Wasser waschen und trocknen und erhält dann 330 Teile 2,4-Dichloracetanilid, die ungefähr 5 % 2,4,6-Trichloracetanilid enthalten. Setzt man das als Filtrat zurückgewonnene Nitrobenzol, in dem noch etwas 2,4-Dichloracetanilid gelöst ist, bei einem zweiten Versuch wieder ein, so erhöht sich die Ausbeute

auf 396 Teile.

B) 2,4-Dichloranilin-6-sulfosäure

204 Teile des rohen 2,4-Dichloracetanilids werden unter Rühren zu 300 Teilen 100-%-iger Schwefelsäure gegeben. Dann erhitzt man das Gemisch weiter auf 130°C und tropft bei dieser Temperatur 235 Teile Chlorsulfonsäure so zu, daß das freiwerdende Salzsäure-Gas gut abgeführt werden kann. Anschließend rührt man 1 Std. bei 135 bis 140°C nach, bis die Sulfierung beendet ist. Dann läßt man auf 80 bis 50°C abkühlen und gießt die Mischung in 1300 Raumteile Wasser ein. Nach kurzer Wasserdampfdestillation erhält man im Destillat 10 Teile reines 2,4,6-Trichloranilin als Nebenprodukt. Das Reaktionsgemisch wird dann auf Raumtemperatur abgekühlt, ausgefallene 2,3-Dichloranilin-6-sulfosäure abfiltriert und mit verdünnter Salzsäure gewaschen. Man erhält 204 Teile 2,4-Dichloranilin-6-sulfosäure ber. 100 % als farblose wäßrige Paste, die feucht für Diazotierungen eingesetzt werden kann.

H-NMR in $D_2O$: 7,3 ppm, 7,6 ppm Kopplung: 3 Hz (als Ammoniumsalz)

C) 2,4-Dichloranilin-5-sulfosäure

600 Teile Oleum (23-%-ig) werden vorsichtig mit 204 Teilen rohem 2,4-Dichloracetanilid versetzt. Man erhitzt das Gemisch auf 140°C und rührt 1 Std. bei dieser Temperatur. Danach läßt man auf 80 bis 50°C abkühlen und gießt die Mischung in 1000 Teile Wasser. Durch Wasserdampfdestillation werden 10 Teile 2,4,6-Trichloranilin abgetrennt, der Rest wird nach dem Erkalten filtriert. Das isolierte, graue produkt wird mit ca. 5000 Teilen Wasser verrührt und mit Natronlauge neutralisiert. Nach dem Versetzen mit etwas Aktivkohle erhitzt man auf ca. 95°C, filtriert und fällt aus dem Filtrat durch Ansäuern die entstandene 2,4-Dichloranilin-5-sulfosäure aus, die nach dem Abkühlen wie üblich isoliert wird. Das Produkt enthält noch einen geringen Anteil 2,4-Dichloranilin-6-sulfosäure, der durch Umkristallisation aus Wasser entfernt werden kann. 2,4-Dichloranilin-5-sulfosäure fällt als farbloses Pulver an. Ausbeute: ca. 140 Teile

H-NMR in $D_2$: 7,45 ppm (als Ammoniumsalz)

**Beispiel 1**

19,5 Teile 2,4-Dichloranilin-6-sulfosäure werden in 200 Raumteilen heißem Wasser mit Natronlauge bei pH 7,5 bis 10 gelöst. Man gibt ein sauer wirksames Netzmittel und 27 Raumteile einer 23-%-igen, wäßrigen Natriumnitritlösung hinzu und kühlt auf 0 bis 5°C ab. Nach Zugabe von 60 Teilen Eis gibt man auf einmal 55 Teile einer 15-bis 18-%-igen Salzsäurelösung hinzu und rührt die Mischung noch 3 Stunden bei 0 bis 5°C. Dann läßt man eine Lösung oder Suspension aus 21,2 Teilen 2,6-Bis-(3-hydroxypropylamino)-3-cyan-4-methylpyridin in 120 Raumteilen Wasser und 7 Raumteilen konzentrierter Salzsäure einfließen. Man rührt 15 bis 30 Minuten nach und hebt den pH-Wert des Gemisches dann durch Zugabe von Natronlauge oder Natriumformiat langsam auf 2 bis 2,5 an. Die durch die Kupplungsreaktion entstehende Säure wird anschließend durch Zugabe entsprechender Mengen Natronlauge oder Natriumformiat kontinuierlich gebunden. Nachdem man die Reaktion ungefähr 30 bis 60 Minuten bei pH 2 bis 2,5 gehalten hat, hebt man den pH-Wert des Gemisches durch Zugabe von verd. Natronlauge oder Natriumacetat auf 3 bis 3,5 an und rührt bei diesem pH-Wert, bis die Kupplung weitgehend beendet ist. Danach wird der pH-Wert des Gemisches durch Versetzen mit verd. Natronlauge auf 4,3 bis 4,7 angehoben. Die Kupplungsreaktion ist dann rasch beendet. Der entstandene Farbstoff der Formel

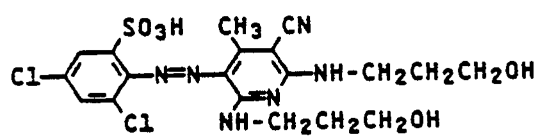

wird durch Zugabe von 80 Teilen Natriumchlorid fast vollständig ausgefällt und anschließend durch Filtration isoliert. Nach dem Trocknen erhält man 42 Teile eines rotbraunen Pulvers, das neben 41 Teilen Farbstoff noch ca. 1 Teil wasserlösliche Salze enthält.

Der Farbstoff löst sich in Wasser mit gelber Farbe und färbt Polycaprolactam und Wolle in kräftigen, lichtechten, goldgelben Tönen. Das Absorptionsmaximum einer Lösung von ca. 0,020 Teilen Farbstoff in 900 Raumteilen Dimethylformamid und 150 Raumteilen Eisessig ist bei 427,5 nm.

Der besondere Vorteil dieses Farbstoffes ist das hohe Migriervermögen und die Fähigkeit, zusammen mit Rot- und Blaufarbstoffen synchron auf Polycaprolactam aufzuziehen. Zum Beispiel ergibt eine Färbemischung von ca. 4 Teilen dieses Farbstoffes mit a. 4 Teilen Acid Red 57 und 3 Teilen Acid Blue 72 ein (Dunkel-)Braun. Alle drei Farbstoffe ziehen im Temperaturbereich von 60 bis 100°C mit gleicher Geschwindigkeit auf Polycaprolactamgewebe auf, so daß die Färbung zu jedem Zeitpunkt braun bleibt. Ebenso ist der Farbstoff in Kombinationsfärbungen für Beige-Töne geeignet, die sich durch hohe Lichtechtheit auszeichnen und insbesondere gegenüber Glühlampenlicht nicht phototrop sind (keine reversible Farbtonänderung nach grünerem Farbton).

**Tabelle 1**

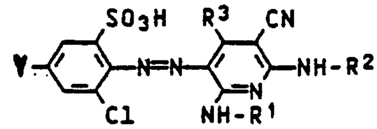

| Nr. | Y | $R^1$ | $R^2$ | $R^3$ | Farbton | λmax (nm) |
|---|---|---|---|---|---|---|
| 1 | Cl | $C_2H_5$ | $C_2H_4OH$ | $CH_3$ | goldgelb | 422 |
| 2 | Cl | $CH_3$ | $C_3H_6OC_4H_8OH$ | $CH_3$ | goldgelb | 420 |
| 3 | Cl | $C_2H_5$ | $C_3H_6OC_4H_8OH$ | $CH_3$ | goldgelb | 422 |
| 4 | Cl | $C_2H_5$ | $C_2H_4OC_2H_4OH$ | $CH_3$ | goldgelb | 421 |
| 5 | Cl | $CH(CH_3)_2$ | $C_2H_4OC_2H_4OH$ | $CH_3$ | goldgelb | 420 |
| 6 | Cl | $CH_2CH_2OCH_3$ | $CH_2CH_2OCH_3$ | $CH_3$ | goldgelb | 419 |
| 7 | Cl | $(CH_2)_3OCH_3$ | $CH_2CH_2OCH_3$ | $CH_3$ | goldgelb | 421 |
| 8 | Cl | $(CH_2)_3OCH_3$ | $(CH_2)_3OCH_3$ | $CH_3$ | goldgelb | 427 |
| 9 | Cl | $CH-CH_2OH$<br>$CH_3$ | $C_2H_4OCH_3$ | $CH_3$ | goldgelb | 422 |
| 10 | Cl | $CH_2CH_2OCH_3$ | $(CH_2)_3OCH_3$ | $CH_3$ | goldgelb | 423 |
| 11 | Cl | $CH_2CH_2OCH_3$ | $CH_2CH_2OH$ | $CH_3$ | goldgelb | 423 |
| 12 | Cl | $CH_2CH_2OCH_3$ | $CH_2CHCH_3$<br>OH | $CH_3$ | goldgelb | 423 |
| 13 | Cl | $CH_2CH_2OCH_3$ | $CH_2CH_2OC_2H_5$ | $CH_3$ | goldgelb | 421 |
| 14 | Cl | $CH_2CH_2OCH_3$ | $(CH_2)_3OCH(CH_3)_2$ | $CH_3$ | goldgelb | 423 |
| 15 | Cl | $CH_2CH_2OCH_3$ | $(CH_2)_3O(CH_2)_4OH$ | $CH_3$ | goldgelb | 423 |
| 16 | Cl | $CH_2CH_2OCH_3$ | $(CH_2)_3OH$ | $CH_3$ | goldgelb | 424 |
| 17 | Cl | $CH_2CH-CH_3$<br>OH | $CH_2CH_2OCH_3$ | $CH_3$ | goldgelb | 423 |
| 18 | Cl | $CH_2CH-CH_3$<br>OH | $(CH_2)_3OCH_3$ | $CH_3$ | orange | 423 |
| 19 | Cl | $CH_2CH-CH_3$<br>OH | $(CH_2)_2OH$ | $CH_3$ | goldgelb | 422 |
| 20 | Cl | $CH_2CH-CH_3$<br>OH | $(CH_2)_3OH$ | $CH_3$ | orange | 424 |
| 21 | Cl | $CH_2CH-CH_3$<br>OH | $(CH_2)_3OC_2H_5$ | $CH_3$ | orange | 424 |
| 22 | Cl | $CH_2CH-CH_3$<br>OH | $CH_2CHCH_3$<br>OH | $CH_3$ | orange | 424 |

| | | | | | | |
|---|---|---|---|---|---|---|
| 23 | Cl | $(CH_2)_3OH$ | $(CH_2)_2OH$ | $CH_3$ | goldgelb | 425 |
| 24 | Cl | $(CH_2)_3OH$ | $CH_2CHCH_3$<br>\|<br>OH | $CH_3$ | goldgelb | 426 |
| 25 | Cl | $(CH_2)_3OH$ | $(CH_2)_2OCH_3$ | $CH_3$ | goldgelb | 426 |
| 26 | Cl | $(CH_2)_3OH$ | $(CH_2)_3OCH_3$ | $CH_3$ | goldgelb | 427 |
| 27 | Cl | $(CH_2)_3OH$ | $(CH_2)_3OC_2H_5$ | $CH_3$ | goldgelb | 426 |
| 28 | Cl | $(CH_2)_2OH$ | $(CH_2)_2OH$ | $CH_3$ | goldgelb | 420 |
| 29 | Cl | $(CH_2)_2OH$ | $(CH_2)_3OH$ | $CH_3$ | goldgelb | 423 |
| 30 | Cl | $(CH_2)_2OH$ | $CH_2CHCH_3$<br>\|<br>OH | $CH_3$ | goldgelb | 423 |
| 31 | Cl | $(CH_2)_2OH$ | $(CH_2)_2OCH_3$ | $CH_3$ | goldgelb | 421 |
| 32 | Cl | $(CH_2)_2OH$ | $(CH_2)_3OCH_3$ | $CH_3$ | goldgelb | 423 |
| 33 | Cl | $(CH_2)_2OH$ | $(CH_2)_3OC_2H_5$ | $CH_3$ | goldgelb | 423 |
| 34 | Cl | $(CH_2)_2OH$ | $C_4H_9(n)$ | $CH_3$ | goldgelb | 427 |
| 35 | Cl | $C_2H_5$ | $C_2H_5$ | $CH_3$ | goldgelb | 420 |
| 36 | Br | $(CH_2)_3OH$ | $(CH_2)_3OH$ | $CH_3$ | goldgelb | 429 |
| 37 | Cl | $CHCH_2OCH_3$<br>\|<br>$CH_3$ | $(CH_2)_2OH$ | $CH_3$ | goldgelb | 425 |
| 38 | Cl | $CHCH_2OCH_3$<br>\|<br>$CH_3$ | $(CH_2)_3OH$ | $CH_3$ | goldgelb | 426 |
| 39 | Cl | $CHCH_2OCH_3$<br>\|<br>$C_2H_5$ | $(CH_2)_3OH$ | $CH_3$ | goldgelb | 426 |
| 40 | Cl | $CHCH_2OCH_3$<br>\|<br>$C_2H_5$ | $(CH_2)_2OH$ | $CH_3$ | goldgelb | 424 |
| 41 | Cl | $(CH_2)_4OH$ | $(CH_2)_4OH$ | $CH_3$ | goldgelb | 430 |
| 42 | Cl | $(CH_2)_4OH$ | $(CH_2)_3OH$ | $CH_3$ | goldgelb | 429 |
| 43 | Cl | $(CH_2)_4OH$ | $(CH_2)_2OH$ | $CH_3$ | goldgelb | 429 |
| 44 | Cl | $(CH_2)_4OH$ | $(CH_2)_2OCH_3$ | $CH_3$ | goldgelb | 428 |

**Tabelle 2**

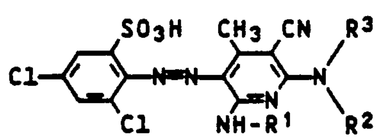

| Nr. | $R^1$ | $R^2$ | $R^3$ | Farbton |
|---|---|---|---|---|
| 1 | $C_4H_8OH$ | $CH\text{-}CH_2OCH_3$<br>\|<br>$CH_3$ | H | goldgelb |

**Beispiel 2**

19,5 Teile 2,4-Dichloranilin-5-sulfosäure werden über Nacht mit 50 Teilen 15-%-iger Salzsäure in Gegenwart eines sauer wirksamen Netzmittels verrührt. Dann kühlt man das Gemisch mit Eis auf 0° C ab, gibt anschließend innerhalb von 5 bis 20 Minuten 27 Raumteile einer 23-%-igen Natriumnitritlösung hinzu und rührt die Suspension noch 3 Stunden bei 0 bis 5° C. Dann läßt man eine Lösung oder Suspension aus 21,2 Teilen 2,6-Bis-(3-hydroxypropylamino)-3-cyan-4-methylpyridin in 120 Raumteilen Wasser und 7 Raumteilen konzentrierter Salzsäure zufließen. Man rührt 15 bis 30 Minuten nach und hebt den pH-Wert des Gemisches dann durch Zugabe von Natronlauge oder Natriumformiat langsam auf 1 bis 1,5 an. Die durch die Kupplungsreaktion entstehende Säure wird anschließend durch Zugabe entsprechender Mengen Natronlauge oder Natriumformiat kontinuierlich gebunden. Nachdem man das Gemisch ungefähr 30 bis 60 Minuten bei pH 1 bis 1,5 gehalten hat, hebt man den pH-Wert durch Zugabe von verd. Natronlauge oder Natriumacetat auf 3 bis 3,5 an. Die Kupplungsreaktion ist rasch beendet. Der entstandene Farbstoff der Formel

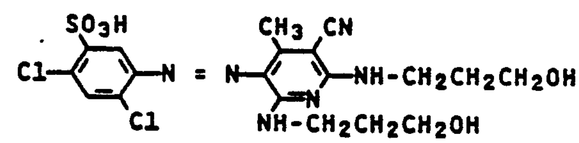

wird durch Zugabe von 40 Teilen Natriumchlorid fast vollständig ausgefällt und anschließend durch Filtration isoliert. Nach dem Trocknen erhält man 44 Teile eines braunen Pulvers.

Der Farbstoff löst sich in Wasser mit gelber Farbe und färbt Polycaprolactam und Wolle in kräftigen, lichtechten, goldgelben Tönen.

Das Absorptionsmaximum einer Lösung von ca. 0,020 Teilen Farbstoff in 900 Raumteilen Dimethylformamid und 150 Raumteilen Eisessig ist bei 457 nm (Wasser: 435 nm).

**Tabelle 3**

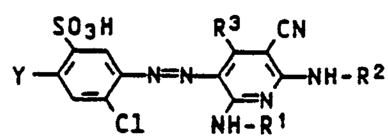

| Nr. | Y | $R^1$ | $R^2$ | $R^3$ | Farbton | λmax (nm) |
|---|---|---|---|---|---|---|
| 1 | Cl | $C_2H_5$ | $C_2H_4OH$ | $CH_3$ | goldgelb | 455 |
| 2 | Cl | $CH_3$ | $C_3H_6OC_4H_8OH$ | $CH_3$ | goldgelb | 454 |
| 3 | Cl | $C_2H_5$ | $C_3H_6OC_4H_8OH$ | $CH_3$ | goldgelb | 455 |
| 4 | Cl | $C_2H_5$ | $C_2H_4OC_2H_4OH$ | $CH_3$ | goldgelb | 453 |
| 5 | Cl | $CH(CH_3)_2$ | $C_2H_4OC_2H_4OH$ | $CH_3$ | goldgelb | 453 |
| 6 | Cl | $CH_2CH_2OCH_3$ | $CH_2CH_2OCH_3$ | $CH_3$ | goldgelb | 454 |
| 7 | Cl | $(CH_2)_3OCH_3$ | $CH_2CH_2OCH_3$ | $CH_3$ | goldgelb | 455 |
| 8 | Cl | $(CH_2)_3OCH_3$ | $(CH_2)_3OCH_3$ | $CH_3$ | goldgelb | 456 |
| 9 | Cl | $CH-CH_2OH$<br>\|<br>$CH_3$ | $C_2H_4OCH_3$ | $CH_3$ | goldgelb | 455 |
| 10 | Cl | $CH_2CH_2OCH_3$ | $(CH_2)_3OCH_3$ | $CH_3$ | goldgelb | 455 |
| 11 | Cl | $CH_2CH_2OCH_3$ | $CH_2CH_2OH$ | $CH_3$ | goldgelb | 453 |
| 12 | Cl | $CH_2CH_2OCH_3$ | $CH_2CHCH_3$<br>\|<br>OH | $CH_3$ | goldgelb | 453 |
| 13 | Cl | $CH_2CH_2OCH_3$ | $CH_2CH_2OC_2H_5$ | $CH_3$ | goldgelb | 452 |
| 14 | Cl | $CH_2CH_2OCH_3$ | $(CH_2)_3OCH(CH_3)_2$ | $CH_3$ | goldgelb | 454 |
| 15 | Cl | $CH_2CH_2OCH_3$ | $(CH_2)_3O(CH_2)_4OH$ | $CH_3$ | goldgelb | 454 |
| 16 | Cl | $CH_2CH_2OCH_3$ | $(CH_2)_3OH$ | $CH_3$ | goldgelb | 454 |

| | | | | | | |
|---|---|---|---|---|---|---|
| 17 | Cl | $CH_2CH-CH_3$<br>\|<br>OH | $CH_2CH_2OCH_3$ | $CH_3$ | goldgelb | 452 |
| 18 | Cl | $CH_2CH-CH_3$<br>\|<br>OH | $(CH_2)_3OCH_3$ | $CH_3$ | orange | 453 |
| 19 | Cl | $CH_2CH-CH_3$<br>\|<br>OH | $(CH_2)_2OH$ | $CH_3$ | goldgelb | 452 |
| 20 | Cl | $CH_2CH-CH_3$<br>\|<br>OH | $(CH_2)_3OH$ | $CH_3$ | orange | 453 |
| 21 | Cl | $CH_2CH-CH_3$<br>\|<br>OH | $(CH_2)_3OC_2H_5$ | $CH_3$ | orange | 453 |
| 22 | Cl | $CH_2CH-CH_3$<br>\|<br>OH | $CH_2CHCH_3$<br>\|<br>OH | $CH_3$ | orange | 453 |
| 23 | Cl | $(CH_2)_3OH$ | $(CH_2)_2OH$ | $CH_3$ | goldgelb | 452 |
| 24 | Cl | $(CH_2)_3OH$ | $CH_2CHCH_3$<br>\|<br>OH | $CH_3$ | goldgelb | 455 |
| 25 | Cl | $(CH_2)_3OH$ | $(CH_2)_2OCH_3$ | $CH_3$ | goldgelb | 453 |
| 26 | Cl | $(CH_2)_3OH$ | $(CH_2)_3OCH_3$ | $CH_3$ | goldgelb | 456 |
| 27 | Cl | $(CH_2)_3OH$ | $(CH_2)_3OC_2H_5$ | $CH_3$ | goldgelb | 456 |
| 28 | Cl | $(CH_2)_2OH$ | $(CH_2)_2OH$ | $CH_3$ | goldgelb | 452 |
| 29 | Cl | $(CH_2)_2OH$ | $(CH_2)_3OH$ | $CH_3$ | goldgelb | 453 |
| 30 | Cl | $(CH_2)_2OH$ | $CH_2CHCH_3$<br>\|<br>OH | $CH_3$ | goldgelb | 453 |
| 31 | Cl | $(CH_2)_2OH$ | $(CH_2)_2OCH_3$ | $CH_3$ | goldgelb | 451 |
| 32 | Cl | $(CH_2)_2OH$ | $(CH_2)_2OCH_3$ | $CH_3$ | goldgelb | 453 |
| 33 | Cl | $(CH_2)_2OH$ | $(CH_2)_3OC_2H_5$ | $CH_3$ | goldgelb | 453 |
| 34 | Cl | $(CH_2)_2OH$ | $C_4H_9(n)$ | $CH_3$ | goldgelb | 456 |
| 35 | Cl | $C_2H_5$ | $C_2H_5$ | $CH_3$ | goldgelb | 449 |
| 36 | Br | $(CH_2)_3OH$ | $(CH_2)_3OH$ | $CH_3$ | goldgelb | 457 |
| 37 | Cl | $CHCH_2OCH_3$<br>\|<br>$CH_3$ | (CH2)$_2$OH | $CH_3$ | goldgelb | 453 |
| 38 | Cl | $CHCH_2OCH_3$<br>\|<br>$CH_3$ | $(CH_2)_3OH$ | $CH_3$ | goldgelb | 454 |
| 39 | Cl | $CHCH_2OCH_3$<br>\|<br>$C_2H_5$ | $(CH_2)_3OH$ | $CH_3$ | goldgelb | 455 |

| | | | | | | |
|---|---|---|---|---|---|---|
| 40 | Cl | $CHCH_2OCH_3$<br>\|<br>$C_2H_5$ | $(CH_2)_2OH$ | $CH_3$ | goldgelb | 454 |
| 41 | Cl | $(CH_2)_4OH$ | $(CH_2)_4OH$ | $CH_3$ | goldgelb | 457 |
| 42 | Cl | $(CH_2)_4OH$ | $(CH_2)_3OH$ | $CH_3$ | goldgelb | 457 |
| 43 | Cl | $(CH_2)_4OH$ | $(CH_2)_2OH$ | $CH_3$ | goldgelb | 456 |
| 44 | Cl | $(CH_2)_4OH$ | $(CH_2)_2OCH_3$ | $CH_3$ | goldgelb | 456 |

## Patentansprüche

1. Verbindungen, die in Form der freien Säuren der Formel

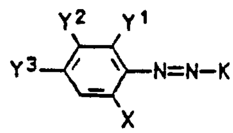

entsprechen, in der

X Chlor, Brom oder Trifluormethyl,
einer der beiden Reste $Y^1$ und $Y^2$ Wasserstoff und der andere Hydroxysulfonyl,
$Y^3$ Chlor oder Brom und
K einen Rest der Formel

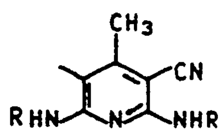

bedeuten, wobei
R für gegebenenfalls durch Sauerstoff unterbrochenes und gegebenenfalls durch Hydroxy, $C_1$-$C_4$-Alkoxy oder Phenoxy substituiertes $C_1$-$C_8$-Alkyl oder Pyrrolidonyl-$C_2$-$C_6$-Alkyl steht.

2. Verwendung der Verbindungen gemäß Anspruch 1 zum Färben von natürlichen oder synthetischen Polyamiden oder von Leder.

## Claims

1. A compound which, in the form of the free acid, is of the formula

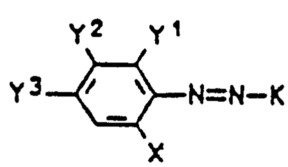

where
X is chlorine, bromine or trifluoromethyl,
one of $Y^1$ and $Y^2$ is hydrogen and the other is hydroxysulfonyl,
$Y^3$ is chlorine or bromine and
K is a radical of the formula

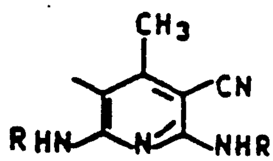

where

R is $C_1$-$C_8$-alkyl which may or may not be interrupted by oxygen and is unsubstituted or substituted by hydroxyl, $C_1$-$C_4$-alkoxy or phenoxy, or is pyrrolidonyl-$C_2$-$C_6$-alkyl.

2. Use of a compound as claimed in claim 1 for dyeing natural or synthetic polyamides or leather.

**Revendications**

1. Composés qui sous forme de l'acide libre répondent à la formule

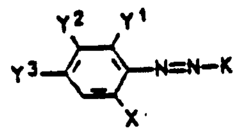

dans laquelle

X est un atome de chlore ou de brome ou un radical trifluorométhyle,

l'un des deux radicaux $Y^1$ et $Y^2$ est un atome d'hydrogène et l'autre un groupement sulfonyle,

$Y^3$ est un atome de chlore ou de brome, et

K est un reste de formule

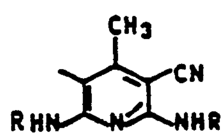

R étant mis pour un radical alkyle en $C_1$-$C_8$ éventuellement interrompu par un atome d'oxygène et éventuellement substitué par un radical hydroxy, alcoxy en $C_1$-$C_4$ ou phénoxy, ou pour un radical pyrrolidonyl(alkyle en $C_2$-$C_6$).

2. Utilisation des composés selon la revendication 1, pour la teinture de polyamides naturels ou synthétiques ou du cuir.